# EUROPEAN PATENT SPECIFICATION

(11) **EP 2 876 186 B1**
(45) Date of publication and mention of the grant of the patent: **18.07.2018**
(21) Application number: 14181807.0
(22) Date of filing: 21.08.2014
(51) Int. Cl.: C23C 22/34, C23C 22/68, C23C 22/22, C23C 22/57, C23C 30/00, C09D 5/00

(54) **COMPOSITION FOR FORMING FILM OF METAL OBJECT, FILM FORMED USING THE SAME, AND METHOD OF FORMING FILM**
ZUSAMMENSETZUNG ZUR HERSTELLUNG EINES FILMS EINES METALLOBJEKTS, DARAUS HERGESTELLTER FILM UND FILMBILDUNGSVERFAHREN
COMPOSITION DE FORMATION DE FILM D'OBJET MÉTALLIQUE, FILM FORMÉ L'UTILISANT ET PROCÉDÉ DE FORMATION DE FILM

(30) Priority: 21.11.2013 KR 20130142141
(43) Date of publication of application: 27.05.2015
(73) Proprietor: Samsung Electronics Co., Ltd., Gyeonggi-do 443-742 (KR)
(72) Inventor: Bae, Jun Cheol, Gyeonggi-do (KR); Baik, Chul, Seoul (KR); Kwon, Pil Gu, Gyeonggi-do (KR); Seo, Moon Su, Gyeonggi-do (KR); Jung, Yeon Kyoung, Seoul (KR); Ham, Cheol, Gyeonggi-do (KR)
(74) Representative: Taor, Simon Edward William

(56) References cited:
- EP-A1- 1 571 237
- EP-A1- 2 474 645
- WO-A1-2006/137663
- CN-A- 101 029 387
- CN-A- 102 634 785
- GB-A- 2 249 108
- US-A- 2 975 082
- US-A- 3 479 229
- M B KANNAN: "Improving the packing density of calcium phosphate coating on a magnesium alloy for enhanced degradation resistance", JOURNAL OF BIOMEDICAL MATERIALS RESEARCH PART A, vol. 101A, no. 5, 24 September 2012 (2012-09-24), pages 1248-1254, XP55154729, ISSN: 1549-3296, DOI: 10.1002/jbm.a.34423

## Description

Embodiments of the present invention relate to a film formation composition for preventing discoloration of a surface of a material containing aluminum (Al) or magnesium (Mg) due to corrosion, a method of preparing a film using the same, a metal object including the film.

Various surface treatment technologies are used to enhance corrosion resistance of materials containing aluminum (Al) or magnesium (Mg). Examples of generally used surface treatment technologies include, but are not limited to, chromate conversion, anodic oxidation, phosphate conversion, organic coating, and hydrofluoric acid salt coating.

Chromate conversion is a method that provides corrosion resistance by forming a chromic compound with low solubility using hexavalent chromium (Cr6+) with high solubility. While excellent corrosion resistance is obtained by chromate conversion, Cr6+ ions cause environmental pollution.

Anodic oxidation is a method for prevention of blackening by performing a desmut process for removal of an oxide of a surface and rigidly forming etched and exposed portions obtained by the desmut process into an oxide film. This method uses strong inorganic acids that are harmful to humans and is complicated in terms of manufacturing processes.

Phosphate conversion is a method by which a water-insoluble phosphate film is formed on a surface of a material containing aluminum or magnesium using phosphoric acid (H3PO4) or the like. This method may cause elimination of intrinsic texture of metals due to formation of an opaque film.

Organic coating is a method by which corrosion resistance is obtained by forming a silanol (Si-O) by reaction between chlorine (Cl) or alkoxy (-OR) of a silane (an organic silane is mostly used) and water and forming a Si-O-M (where M is Al or Mg) bond by reaction between the silanol and a hydroxyl group (-OH) at a surface of Al or Mg. In this method, when forming a film at room temperature, a porous film is formed, whereby corrosion resistance is reduced.

Hydrofluoric acid salt coating is a method by which an inorganic material-containing oxide is formed on a surface of a material containing Al or Mg using hydrofluoric acid containing an inorganic material (e.g., titanium, zirconium, silicon, or the like). This method provides excellent corrosion resistance, while having very short reaction time due to use of hydrofluoric acid with strong reactivity. In addition, when treatment time increases, a surface treatment degree varies and thus problems such as acceleration of local corrosion and the like may occur.

EP1571237, CN10 1029387, M B Kannan: "Improving the packing density of calcium phosphate coating on a magnesium alloy for enhanced degradation resistance", Journal of Biomedical Materials Research Part A, vol. 101A, no. 5, 24 September 2012, pages 1248-1254, and CN102634785 relate to anti-corrosive films.

According to an aspect of the present invention, there is provided a film forming composition according to claim 1. According to another aspect of the present invention, there is provided a method of preparing a film according to claim 4. According to another aspect of the present invention, there is provided a metal object according to claim 5. Optional features are set out in the dependent claims. In an aspect not according to the present invention it is provided a film formation composition including at least one salt selected from the group consisting of a hydrofluoric acid salt, a phosphate, and a nitrate and at least one hydrogen antifoaming agent selected from the group consisting of a hydrogen foaming inhibitor, a hydrogen bubble adhesion inhibitor, and a base for pH adjustment.

Additional aspects of the invention will be set forth in part in the description which follows and, in part, will be obvious from the description, or may be learned by practice of the invention.

In accordance with one aspect of the present invention, a film formation composition for surface treatment of a metal object comprises fluorotitanic acid (H2TiF6), epichlorohydrin; and a hydrogen bubble adhesion inhibitor selected from the group consisting of calcium chloride (CaCl2), calcium nitrate (Ca(NO3)2), barium chloride (BaCl2), and strontium chloride (SrCl2).

The film formation composition of the present invention may further comprise a further hydrofluoric acid salt, e.g. selected from the group consisting of hexafluoro zirconic acid (H2ZrF6), hexafluorosilicic acid (H2SiF6), fluorophosphoric acid (HPF6), and magnesium silicofluoride (MgSiF6).

The film formation composition of the present invention may further comprise at least one phosphate, e.g. selected from the group consisting of disodium phosphate (Na2HPO4) and zinc phosphate (Zn3(PO4)2).

The film formation composition of the present invention may further comprise at least one nitrate, e.g. selected from the group consisting of zinc nitrate (Zn(NO3)2•H2O) and calcium nitrate (Ca(NO3)2).

The film formation composition of the present invention may further comprise at least one hydrogen foaming inhibitor, e.g. selected from the group consisting of aldehyde (CHO-), peroxodisulfuric acid (S2O82-), and permanganate (MnO4-).

The film formation composition of the present invention may further comprise a further hydrogen bubble adhesion inhibitor, e.g. at least one alkali earth metal compound selected from the group consisting of calcium chloride (CaCl2), calcium nitrate (Ca(NO3)2), barium chloride (BaCl2), and strontium chloride (SrCl2).

The film formation composition of the present invention may further comprise at least one base selected from the group consisting of ammonium hydroxide (NH4OH) and sodium hydroxide (NaOH).

The metal object may include at least one metal component selected from the group consisting of aluminum and magnesium.

The film formation composition may include, as an agent for control of a surface energy of the metal object, an organic solvent having a hydroxyl group (-OH) or forming an -OH group through reaction.

The organic solvent may include at least one selected from the group consisting of isopropyl alcohol, glycerol, and polyethylene glycol.

In accordance with another aspect of the present invention, a method of preparing a film includes applying to or coating a metal object with the film formation composition of the invention, as described herein.

The film may be a primer layer and further include a protective layer on the primer layer.

The film may include about 0.1 wt% to about 50 wt% of at least one component selected from the group consisting of titanium (Ti), zirconium (Zr), silicon (Si), phosphorus (P), zinc (Zn), magnesium (Mg), and aluminum (Al), about 0.1 wt% to about 30 wt% of at least one component selected from the group consisting of nitrogen (N), fluorine (F), and Zn, about 0.1 wt% to about 30 wt% of at least one component selected from the group consisting of sodium (Na), sulfur (S), and potassium (K), and about 0.1 wt% to about 50 wt% of at least one component selected from the group consisting of calcium (Ca), barium (Ba), and strontium (Sr).

According to an aspect of the invention, there is provided a film formation composition for surface treatment of a metal object as set out in claim 1. Preferred features are set out in claims 2 to 3.

According to an aspect of the invention, there is provided a method as set out in claim 4.

According to an aspect of the invention, there is provided a metal object having a film formed on a surface thereof as set out in claim 5. Preferred features are set out in claim 6.

Reference will now be made in detail to the embodiments of the present invention. The embodiments described in the present specification are only exemplary embodiments of the present invention, and it is to be understood that the present invention covers a variety of modifications within the scope of the appended claims.

Embodiments of the present invention can provide a film formation composition that enhances corrosion resistance of a material containing (for example) aluminum (Al) or magnesium (Mg) and maintains an intrinsic metallic texture of the material, a film for prevention of corrosion formed using the film formation composition, and a method of preparing the film.

In addition, a method of preparing a film according to another embodiment of the present invention includes coating a metal object with the above-described film formation composition and drying the coated film formation composition (e.g. drying a liquid solvent included in the coated film formation composition).

The metal object coated with the film formation composition may include at least one metal component selected from the group consisting of Al and Mg.

In the film formation composition and a method of preparing the same, the fluorotitanic acid (H2TiF6) included in the film formation composition imparts corrosion resistance to a film formed using the film formation composition. The film formation composition of the present invention may further comprise a further hydrofluoric acid salt, e.g. at least one selected from the group consisting of hexafluoro zirconic acid (H2ZrF6), hexafluorosilicic acid (H2SiF6), fluorophosphoric acid (HPF6), and magnesium silicofluoride (MgSiF6).

The film formation composition of the present invention may further comprise a phosphate , e.g. at least one selected from the group consisting of disodium phosphate (Na2HPO4) and zinc phosphate (Zn3(PO4)2).

The film formation composition of the present invention may further comprise a nitrate, e.g. at least one selected from the group consisting of zinc nitrate (Zn(NO3)2•H2O) and calcium nitrate (Ca(NO3)2).

In the film formation composition and the method of preparing the same, the hydrogen bubble adhesion inhibitor included in the film formation composition serves to address surface non-uniformity problems occurring due to adhesion of a large amount of hydrogen foams to a surface of a material on which film treatment is performed, in film treatment of a metal and to maintain corrosion resistance of the material on which film treatment is performed.

The film formation composition of the present invention may further comprise a hydrogen foaming inhibitor, e.g. at least one selected from the group consisting of aldehyde (CHO-), peroxodisulfuric acid (S2O82-), and permanganate (MnO4-). The hydrogen foaming inhibitor may be a material having a higher standard reduction potential than -0.83 eV, which is a standard reduction potential of water, for example, a material having a higher standard reduction potential than 0.0 eV, which is a standard reduction potential of hydrogen. The hydrogen foaming inhibitor may include an organic compound having a polarity index of 2.5 or more.

The hydrogen bubble adhesion inhibitor is at least one alkali earth metal compound selected from the group consisting of calcium chloride (CaCl2), calcium nitrate (Ca(NO3)2), barium chloride (BaCl2), and strontium chloride (SrCl2).

The film formation composition of the present invention may further comprise a base for pH adjustment , e.g. at least one selected from the group consisting of ammonium hydroxide (NH4OH) and sodium hydroxide (NaOH).

In addition, the film formation composition may further include, as an agent for control of a surface energy of the metal object, an organic solvent that has a hydroxyl group (-OH) or forms an -OH group through reaction. More particularly, the organic solvent may include at least one selected from the group consisting of isopropyl alcohol, glycerol, and polyethylene glycol.

A film formed on the surface of the metal object according to another embodiment of the present invention is formed by applying (e.g. coating) the above-described film formation composition on a surface of a metal object.

The film formation composition used to form the film formed on the surface of the metal object according to this embodiment is identical to that described in the above embodiment, and the film may have a composition ratio as follows.

The film formed on the surface of the metal object according to this embodiment includes about 0.1 wt% to about 50 wt% of at least one selected from the group consisting of titanium (Ti), zirconium (Zr), silicon (Si), phosphorus (P), zinc (Zn), magnesium (Mg), and aluminum (Al), about 0.1 wt% to about 30 wt% of at least one selected from the group consisting of nitrogen (N), fluorine (F), and Zn, about 0.1 wt% to about 30 wt% of at least one selected from the group consisting of sodium (Na), sulfur (S), and potassium (K), and about 0.1 wt% to about 50 wt% of at least one selected from the group consisting of calcium (Ca), barium (Ba), and strontium (Sr).

In addition, the film formed on the surface of the metal object may include, as a primer layer, a film coated on the surface of the metal object and further include a protective layer formed on the primer layer, in which the protective layer may include a resin such as acryl or the like.

Embodiments of the present invention will now be described in further detail with reference to the following examples. These examples are for illustrative purposes only and are not intended to limit the scope of the invention.

### [Reference Example 1]

1.5 g (60 wt%) of fluorotitanic acid (available from Sigma-Aldrich Corporation), 26.5 g (37 wt%) of formaldehyde (available from Samchun Chemical Co., Ltd), and 0.3 g of calcium chloride (CaC12•2H2O) (available from Daejung Chemicals & Metals) are added to 300 g of water (H2O) and mixed therein for 30 minutes. Next, a surface of an Mg alloy (AZ31) is washed with acetone (available from Daejung Chemicals & Metals) and then immersed in the mixed solution for 5 minutes to implement film treatment. After film treatment, the resulting structure is washed with water using a sprayer for 1 minute, dried using an air gun, and further dried using a dryer at 80°C for 10 minutes.

### [Reference Example 2]

1.5 g (60 wt%) of fluorotitanic acid (available from Sigma-Aldrich Corporation), 0.3 g of sodium persulfate (Na2S2O8) (available from Sigma-Aldrich Corporation), and 0.6 g of CaCl2•2H2O (available from Daejung Chemicals & Metals) are added to 300 g of H2O and mixed therein for 30 minutes. Next, a surface of an Mg alloy (AZ31) is washed with acetone (available from Daejung Chemicals & Metals) and then immersed in the mixed solution for 5 minutes to implement film treatment. After film treatment, the resulting structure is washed with water using a sprayer for 5 minutes, dried using an air gun, and further dried using a dryer at 80°C for 10 minutes.

### [Example 1]

1.5 g (60 wt%) of fluorotitanic acid (available from Sigma-Aldrich Corporation), 5 g of epichlorohydrin (available from Sigma-Aldrich Corporation), and 0.6 g of CaCl2•2H2O (available from Daejung Chemicals & Metals) are added to 300 g of H2O and mixed therein for 30 minutes. Next, a surface of an Mg alloy (AZ31) is washed with acetone (available from Daejung Chemicals & Metals) and then immersed in the mixed solution for 5 minutes to implement film treatment. After film treatment, the resulting structure is washed with water using a sprayer for 1 minute, dried using an air gun, and further dried using a dryer at 80°C for 10 minutes.

### [Reference Example 3]

0.9 g of sodium phosphate (available from Sigma-Aldrich Corporation), 0.3 g of sodium sulfate (available from Sigma-Aldrich Corporation), and 0.6 g of CaCl2•2H2O (available from Daejung Chemicals & Metals) are added to 300 g of H2O and mixed therein for 30 minutes. Next, a surface of an Mg alloy (AZ31) is washed with acetone (available from Daejung Chemicals & Metals) and then immersed in the mixed solution for 5 minutes to implement film treatment. After film treatment, the resulting structure is washed with water using a sprayer for 1 minute, dried using an air gun, and further dried using a dryer at 80°C for 10 minutes.

### [Reference Example 4]

1.1 g of zinc nitrate (Zn(NO3)2•H2O) (available from Sigma-Aldrich Corporation), 0.3 g of sodium sulfate (available from Sigma-Aldrich Corporation), and 0.6 g of CaCl2•2H2O (available from Daejung Chemicals & Metals) are added to 300 g of H2O and mixed therein for 30 minutes. Next, a surface of an Mg alloy (AZ31) is washed with acetone (available from Daejung Chemicals & Metals) and then immersed in the mixed solution for 5 minutes to implement film treatment. After film treatment, the resulting structure is washed with water using a sprayer for 1 minute, dried using an air gun, and further dried using a dryer at 80°C for 10 minutes.

### [Comparative Example 1]

A surface of an Mg alloy (AZ31) is washed with acetone (available from Daejung Chemicals & Metals).

### [Comparative Example 2]

1.5 g (60 wt%) of fluorotitanic acid (available from Sigma-Aldrich Corporation) is added to 300 g of H2O and mixed therein for 30 minutes. Next, a surface of an Mg alloy (AZ31) is washed with acetone (available from Daejung Chemicals & Metals) and then immersed in the mixed solution for 1 minute to implement film treatment. After film treatment, the resulting structure is washed with water using a sprayer for 1 minute, dried using an air gun, and further dried using a dryer at 80°C for 10 minutes.

### [Comparative Example 3]

1.5 g (60 wt%) of fluorotitanic acid (available from Sigma-Aldrich Corporation) and 0.3 g of sodium peroxodisulfate (available from Sigma-Aldrich Corporation) are added to 300 g of H2O and mixed therein for 30 minutes. Next, a surface of an Mg alloy (AZ31) is washed with acetone (available from Daejung Chemicals & Metals) and then immersed in the mixed solution for 5 minutes to implement film treatment. After film treatment, the resulting structure is washed with water using a sprayer for 1 minute, dried using an air gun, and further dried using a dryer at 80°C for 10 minutes.

### [Experimental Example 1]: Experiment for Measurement of Color Difference Variation

To evaluate corrosion resistance, the prepared samples are left under conditions of 80°C/ 80% humidity for 2 days and color difference variation of each sample is measured using a color difference meter.

**[Table 1]**

| | Reference Example 1 | Reference Example 2 | Example 1 | Reference Example 3 | Reference Example 4 | Comp Example 1 | Comp Example 2 | Comp Example 3 |
|---|---|---|---|---|---|---|---|---|
| Surface state prior to 80ºC/80 % humidity | ○ | ○ | ○ | ○ | ○ | ○ | × | × |
| ΔE | ○ | ○ | ○ | ○ | ○ | × | ○ | × |

In Table 1, surface state prior to 80°C/80% humidity denotes a surface state prior to exposure of the surface of the Mg alloy of each of Example 1, reference Examples 1 to 4 and Comparative Examples 1 to 3 to conditions of 80°C/80% humidity. A case in which the surface of each Mg alloy is clean is represented by '○', and a case in which the surface of each Mg alloy is stained is represented by '×'. In addition, ΔE denotes a color difference and a case in which ΔE is 4.0 or less is represented by '○'.

A color difference meter will now be described in further detail. The color difference meter numerically represents a color difference by measuring comparison values based on standard colors, and the color difference is defined by the following equation: ΔE=(ΔL+Δa+Δb)1/2. In this regard, L denotes brightness and a and b denote chroma. That is, in the L-axis, L=100 indicates white and L=0 indicates black. In addition, in the a-axis, +a indicates red series and -a indicates green series. In the b-axis, +b indicates yellow series and -b indicates blue series.

In the color difference variation experiment to numerically represent effects of the present invention, low ΔE indicates that, when a coating film is formed by coating a metal object with a coating composition according to an embodiment of the present invention, corrosion resistance of the metal object is increased and thus less corrosion occurs even under high temperature and high humidity conditions. On the other hand, high ΔE indicates that, when the metal object is exposed to high temperature and high humidity conditions, corrosion of the metal object greatly occurs.

In Table 1, a reference value of ΔE for representing a corrosion degree of each metal object is defined as 4 and ΔE values are shown based thereon. Example 1 represents a case in which a film is formed on a surface of an Mg alloy using a coating composition according to embodiments of the present invention, Comparative Example 1 represents a case in which a film is not formed on a surface of an Mg alloy, Comparative Example 2 represents a case in which a film is formed on a surface of an Mg alloy using a coating composition containing only hydrofluoric acid salt , and Comparative Example 3 represents a case in which a film is formed on a surface of an Mg alloy using a coating composition containing only a hydrofluoric acid salt and sodium peroxodisulfate. From results shown in Table 1, it can be confirmed that film treatment using a hydrofluoric acid salt enhances corrosion resistance of the Mg alloy.

More particularly, Table 1 shows surface states of the Mg alloys of Example 1, Reference Examples 1 to 4 and Comparative Examples 1 to 3 before exposure to high temperature and high humidity conditions of 80°C/80% humidity. Referring to Table 1, it can be confirmed that the surfaces of the Mg alloys of Example 1, Reference Examples 1 to 4 and Comparative Example 1 are clean, while the surfaces of the Mg alloys of Comparative Examples 2 and 3 are stained.

When comparing the results of the Mg alloys of Example 1, Reference Examples 1 to 4 and Comparative Examples 1 to 3 after being exposed to high temperature and high humidity conditions of 80°C/80% humidity, it can be confirmed that the Mg alloys of Example 1, Reference Examples 1 to 5 and Comparative Example 2 exhibit an ΔE value of 4 or less, which indicates that corrosion of each Mg alloy occurs less even under high temperature and high humidity conditions, while the Mg alloys of Comparative Examples 1 and 3 exhibit an ΔE value of 4 or more, which indicates that corrosion of each Mg alloy greatly occurs under high temperature and high humidity conditions.

In summary, it can be confirmed that while film treatment using a hydrofluoric acid salt enhances corrosion resistance of an Mg alloy, when fluorotitanic acid is used alone, a large amount of hydrogen bubbles is adhered to a surface of an Mg alloy during film treatment and thus surface uniformity is reduced. In addition, it can be confirmed that, when a hydrogen foaming inhibitor is used alone, the amount of hydrogen bubbles generated is decreased, while adhesion of the hydrogen bubbles to a surface of a material subjected to film treatment is not inhibited and thus a stain is formed in a direction in which bubbles are generated. In addition, it can be confirmed that corrosion occurs due to non-uniformity of film treatment and thus ΔE exceeds 4.0.

In contrast, when a hydrogen foaming inhibitor and a hydrogen bubble adhesion inhibitor are used in combination, the amount of hydrogen bubbles generated during film treatment decrease and adhesion of the hydrogen bubbles to a surface of an Mg alloy may be inhibited and thus a uniform surface may be obtained. That is, when comparing to Comparative Examples 2 and 3, it can be confirmed that it is easy to control film treatment processes and obtain a uniform surface in Example 1.

Embodiments of the present invention provide a film formation composition that enhances corrosion resistance of a material containing Al or Mg and maintains an intrinsic metallic texture of the material, a metal object having a film formed on a surface thereof for prevention of corrosion formed using the film formation composition, and a method of preparing the film. The film formation composition includes a hydrogen bubble adhesion inhibitor and thus adhesion of hydrogen bubbles to a surface of a material subjected to film treatment may be inhibited and, accordingly, a uniform surface may be obtained.

As discussed, embodiments of the invention can provide a film formation composition as described herein.

As is apparent from the above description, film formation compositions according to embodiments of the present invention may have the following effects.

First, a film formation composition includes hydrogen bubble adhesion inhibitor and thus adhesion of hydrogen bubbles to a surface of a material subjected to film treatment may be inhibited and, accordingly, a film treatment time may increase and a uniform surface may be obtained.

Consequently, corrosion resistance of a material containing Al or Mg may be enhanced and an intrinsic metallic texture of the material may be maintained.

Although a few embodiments of the present invention have been shown and described, it would be appreciated by those skilled in the art that changes may be made in these embodiments without departing from the scope of the invention, as defined in the claims.

## Claims

1. A film formation composition for surface treatment of a metal object, the film formation composition comprising:
fluorotitanic acid (H₂TiF₆);
epichlorohydrin; and
a hydrogen bubble adhesion inhibitor, selected from the group consisting of:
calcium chloride (CaCl₂),
calcium nitrate (Ca(NO₃)₂),
barium chloride (BaCl₂), and
strontium chloride (SrCl₂);.

2. The film formation composition according to claim 1 wherein the hydrogen bubble adhesion inhibitor is calcium chloride.

3. The film formation composition according claim 1 or 2, wherein the metal object comprises at least one metal component selected from the group consisting of aluminum and magnesium.

4. A method of preparing a film, the method comprising:
applying a metal object with the film formation composition according to any one of claims 1 to 3 and drying the film formation composition.

5. A metal object having a film formed on a surface thereof, which is obtainable by applying a metal object with the film formation composition according to any one of claims 1 to 3 and drying the film formation composition.

6. The metal object according to claim 5, wherein the film is a primer layer and further comprises a protective layer on the primer layer.

## Patentansprüche

1. Filmbildungszusammensetzung zur Oberflächenbehandlung eines Metallobjekts, wobei die Filmbildungszusammensetzung Folgendes umfasst:
Dihydrogenhexafluorotitanat (H₂TiF₆);
Epichlorohydrin und
einen Wasserstoffblasenadhäsionshemmer, der aus der Gruppe bestehend aus folgenden ausgewählt ist:
Calciumchlorid (CaCl₂),
Calciumnitrat (Ca(NO₃)₂),
Bariumchlorid (BaCl₂) und
Strontiumchlorid (SrCl₂).

2. Filmbildungszusammensetzung nach Anspruch 1, wobei der Wasserstoffblasenadhäsionshemmer Calciumchlorid ist.

3. Filmbildungszusammensetzung nach Anspruch 1 oder 2, wobei das Metallobjekt mindestens eine Metallkomponente umfasst, die aus der Gruppe bestehend aus Aluminium und Magnesium ausgewählt ist.

4. Verfahren zur Herstellung eines Films, wobei das Verfahren Folgendes umfasst:
Beschichten eines Metallobjekts mit der Filmbildungszusammensetzung nach einem der Ansprüche 1 bis 3 und Trocknen der Filmbildungszusammensetzung.

5. Metallobjekt, das einen Film auf einer Oberfläche davon gebildet aufweist und das durch Beschichten eines Metallobjekts mit der Filmbildungszusammensetzung nach einem der Ansprüche 1 bis 3 und Trocknen der Filmbildungszusammensetzung erhältlich ist.

6. Metallobjekt nach Anspruch 5, wobei der Film eine Primerschicht ist und weiterhin eine Schutzschicht auf der Primerschicht umfasst.

## Revendications

1. Composition de formation de film pour le traitement de surface d'un objet métallique, la composition de formation de film comprenant :
de l'acide fluorotitanique (H₂TiF₆) ;
de l'épichlorhydrine ; et
un inhibiteur d'adhérence de bulles d'hydrogène, choisi dans le groupe constitué par :
le chlorure de calcium (CaCl₂),
le nitrate de calcium (Ca(NO₃)₂),
le chlorure de baryum (BaCl₂) et
le chlorure de strontium (SrCl₂).

2. Composition de formation de film selon la revendication 1 dans laquelle l'inhibiteur d'adhérence de bulles d'hydrogène est le chlorure de calcium.

3. Composition de formation de film selon la revendication 1 ou 2, dans laquelle l'objet métallique comprend au moins un constituant métallique choisi dans le groupe constitué par l'aluminium et le magnésium.

4. Procédé de préparation d'un film, le procédé comprenant :
l'application de la composition de formation de film selon l'une quelconque des revendications 1 à 3 sur un objet métallique et le séchage de la composition de formation de film.

5. Objet métallique sur une surface duquel un film est formé, qui peut être obtenu par application de la composition de formation de film selon l'une quelconque des revendications 1 à 3 sur un objet métallique et séchage de la composition de formation de film.

6. Objet métallique selon la revendication 5, dans lequel le film est une couche d'apprêt et comprend en outre une couche protectrice sur la couche d'apprêt.
